(19) **Europäisches Patentamt**

**European Patent Office**

**Office européen des brevets**

(11) **EP 1 434 981 B1**

(12) **EUROPEAN PATENT SPECIFICATION**

(45) Date of publication and mention
of the grant of the patent:
**05.07.2006 Bulletin 2006/27**

(51) Int Cl.:
**G01N 21/88** (2006.01)     **G01B 11/30** (2006.01)

(21) Application number: **02785145.0**

(22) Date of filing: **01.10.2002**

(86) International application number:
**PCT/EP2002/011011**

(87) International publication number:
**WO 2003/031955 (17.04.2003 Gazette 2003/16)**

(54) **APPARATUS FOR THE FAST, QUANTITATIVE, NON-CONTACT TOPOGRAPHIC INVESTIGATION OF SEMICONDUCTOR WAFERS AND OTHER MIRROR LIKE SURFACES**

VORRICHTUNG ZUR SCHNELLEN, QUANTITATIVEN, KONTAKTLOSEN TOPOGRAFISCHEN UNTERSUCHUNG VON HALBLEITERSCHEIBEN ODER SPIEGELÄHNLICHEN OBERFLÄCHEN

APPAREIL DESTINE A L'ETUDE RAPIDE, QUANTITATIVE, TOPOGRAPHIQUE EXEMPTE DE CONTACT DE PLAQUETTES SEMI-CONDUCTRICES ET D'AUTRES SURFACES SIMILAIRES A DES MIROIRS

(84) Designated Contracting States:
**AT BE BG CH CY CZ DE DK EE ES FI FR GB GR IE IT LI LU MC NL PT SE SK TR**

(30) Priority: **02.10.2001 HU 0104057**

(43) Date of publication of application:
**07.07.2004 Bulletin 2004/28**

(73) Proprietors:
• **Hungarian Academy of Sciences Research Institute**
**for Technical Physics and Materials Science**
**1121 Budapest (HU)**
• **Fraunhofer-Gesellschaft zur Förderung der angewandten Forschung e.V.**
**80636 München (DE)**

(72) Inventors:
• **LUKACS, István, Endre**
**H-1144 Budapest (HU)**
• **MAKAI, János**
**H-1056 Budapest (HU)**
• **RIESZ, Ferenc**
**H-2000 Szentendre (HU)**
• **SZENTPALI, Béla**
**H-1137 Budapest (HU)**
• **PFITZNER, Lothar**
**91054 Erlangen (DE)**

(56) References cited:
**WO-A-00/29835**

• **F. RIESZ: "Geometrical optical model of the image formation in Makyoh (magic-mirror) topography" J.PHYS.D: APPL.PHYS., vol. 33, 2000, pages 3033-3040, XP002229672 UK**
• **F.RIESZ: "Camera length and field of view in Makyoh-topography instruments" R.S.I., vol. 72, no. 2, February 2001 (2001-02), pages 1591-1593, XP002229673 America**
• **F. RIESZ: "Makyoh topography for the morphological study of compound semiconductor wafer and structures" MATERIALS SCIENCE & ENGINEERING, vol. B80, 2001, pages 220-223, XP002229676 NL**
• **J. SZABO', F. RIESZ, AND B. SZENTPÀLI: "Makyoh Topography: Curvature Measurements and Implications for the Image Formation" JPN. J. APPL. PHYS. , vol. 35, 15 February 1996 (1996-02-15), pages L258-L261, XP002229674**
• **LACZIK Z J: "QUANTITATIVE MAKYOH TOPOGRAPHY" PROC. ANNUAL ACM SYMP. ON PRINCIPLES OF DISTRIBUTED COMPUTING, XX, XX, vol. 3743, May 1999 (1999-05), pages 151-156, XP000874538**
• **P. TÖRÖK AND L. MULE'STAGNO: "Applications of scanning optical microscopy in materials science to detect bulk microdefects in semiconductors" JOURNAL OF MICROSCOPY, vol. 188, no. 1, October 1997 (1997-10), pages 1-16, XP002229675 UK**

- KOEHLER R: "PLANE-WAVE X-RAY TOPOGRAPHY AND ITS APPLICATION TO SEMICONDUCTOR PROBLEMS" JOURNAL OF MATERIALS SCIENCE. MATERIALS IN ELECTRONICS, CHAPMAN AND HALL, LONDON, GB, vol. 10, no. 3, May 1999 (1999-05), pages 167-174, XP000912483 ISSN: 0957-4522

- KAYAALP A E ET AL: "USING SEM STEREO TO EXTRACT SEMICONDUCTOR WAFER PATTERN TOPOGRAPHY" PROCEEDINGS OF THE SPIE, SPIE, BELLINGHAM, VA, US, vol. 775, 1987, pages 18-26, XP000918713

**Description**

The microelectronics industry requires perfectly flat, mirror like surfaces having defect-free single-crystal wafers as a base for the production of integrated circuits and components; any deviation from the ideal plane makes the manufacturing process difficult or even impossible or the yield of the manufactured circuits decreases.

Such defects may often originate during the individual steps of the crystal and wafer production (cutting, polishing). Many of the technological phases of the production of the integrated circuits (annealing, layer deposition, structuring) may cause curving or warp of the originally flat surface. Consequently, the investigation of the flatness is crucial both for the wafer manufacturer and the consumer. Having a investigating procedure the wafers can be screened before using them, thus sparing many expensive technological steps.

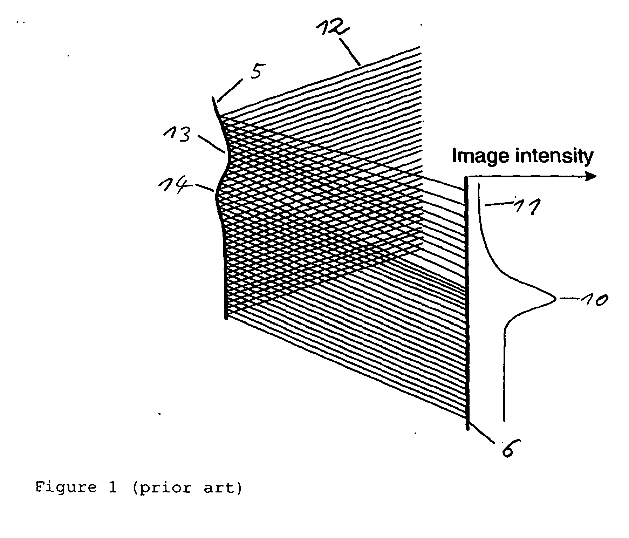

US 4,547,073 discloses an instrument with a Makyoh topograph. The principle of the image formation is detailed in figure 1. The homogeneous parallel beam 12 falls on the surface 5 to be investigated. If the surface is perfectly flat, then a homogeneous spot appears on the screen 6 positioned at a certain distance away from the surface. If the surface is not uniformly flat, the parallelism of the reflected beam is disturbed causing non-uniformity in its intensity distribution and an image appears on the screen that reflects the topography of the surface. For example, the dent 14 focuses the beam causing an intensity maximum 10 on the screen, while a hillock 13 defocuses the beam that results in an intensity minimum 11. The sensitivity of the technique increases with increasing sample-screen distance. The disadvantage of the method is the lack of quantitative evaluation.

From WO 00/29835, a method for quantitative evaluation is known. It comprises taking two pictures at two different sample-screen distances; the surface topography and reflectivity map is determined by the iteration of the diffraction integrals of the surface. The method can provide quantitative results, but the disadvantage is the extreme slowness of the algorithm and the high requirements concerning the quality of the beam and the mechanical adjustments.

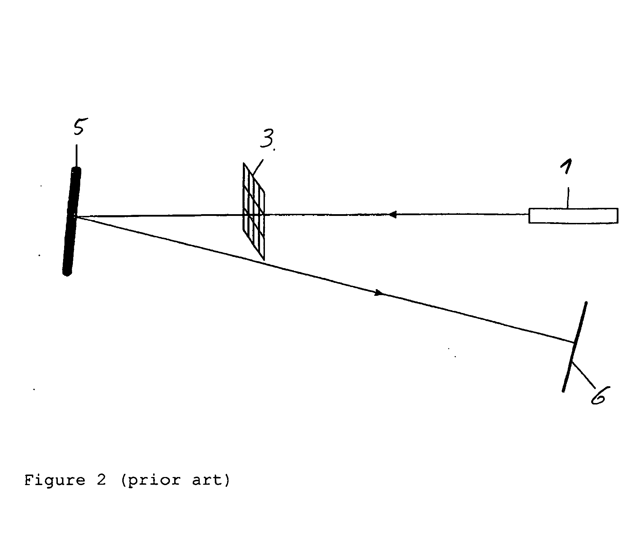

K. H. Yang, Journal of the Electrochemical Society, Vol. 132, 1985, p. 1214 discloses a further improvement. As detailed in figure 2, a light beam 12 collimated by means of a collimator falls to the surface 5 and the reflected image is formed on the screen 6 located some distance away from the surface. The beam 12 traverses a quadratic grid 3 and from the position of the image of the grid points, the curvature of the surface can be calculated. Nevertheless, the reported evaluation method is suitable only to determine uniform curvatures. A further disadvantage is that, as a consequence of the great grid-sample and grid-screen distances, the diffraction effects cause blurring of the image of the grid, resulting in an inaccurate determination of the grid points. Thus, the error of the method increases. Greater deformation may cause an overlap of the image of the grid points that inhibits evaluation, and limits the density of the grid points decreasing the achievable lateral resolution.

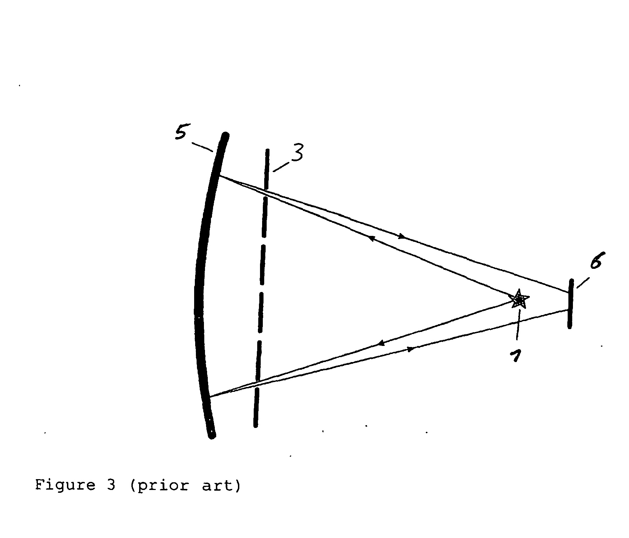

From D. Malacara(Ed.), Optical shop testing, John Wiley and Sons, New York, 1978, p. 323.1 the ."Hartman test" is known. It is used for the evaluation of optical components, especially astronomic mirrors of large diameter", by means of projected masks. [A typical realization of the technique is shown in Fig. 3. The light of the point source 1 is projected to the surface to be investigated 5 through a mask 3, which is an opaque plate with holes. The beam reflected through the holes reaches the screen 6. From the position of the reflected beam of a given (x, y) point on the screen, the height of the point h(x, y) compared to a reference point having an arbitrarily chosen height of zero, can be calculated by the summation approximation of an integral where the summation is carried out between the reference and the given point on the route defined by the neighboring holes of the mask. The members of the said summation are the product of three quantities: a geometrical constant L characteristic to the optical lay-out, the difference of the measured coordinates of the ideally flat and the real surface and the distance between the given and the neighboring points. For example, for quadratic grids the calculation can be carried out by the equation:

$$h(x, y) = \frac{1}{2L} \sum_{i} \left[ \Delta x (x_i' - f_{xi}) + \Delta y (y_i' - f_{yi}) \right]$$

where, $\Delta x$ and $\Delta y$ are the lengths of the grid projected on the sample surface, $f_{xi}$, $f_{yi}$ are the measured coordinates of the image of the surface point $(x_i, y_i)$ and $(x_i', y_i')$ are the coordinates of the image of the point $(x_i, y_i)$ for an ideal flat surface.

The problem which the present invention sets out to solve is therefore the provision of an apparatus for determining the topography of a semiconductor surface with high speed in a non-contact operation. Furthermore, the problem which the present invention sets out to solve is to provide an apparatus for the investigation of samples with diameters as large as 300 mm and more with high lateral resolution. The apparatus should feature a higher sensitivity and accuracy as known from the prior art.

The problem is solved by an apparatus for the non-contact, fast quantitative topographic investigation of semiconductor wafers and other mirror-like surfaces, which consists of light source, a concave mirror 4 which makes the beam of the light source parallel and projects the collimated light beam onto the studied surface, a structured pattern mask 3 located between said light source and said mirror and an image sensor located in the path of the light beam reflected from said concave mirror.

A computer 8 is connected through an appropriate interface 7 to the sensor, which, on one hand, displays the image sensed by the sensor on a monitor connected to it, and, on the other hand, with an algorithm (e.g., a correlation method), determines the position of the image elements of the mask's image.

Advantageously, the apparatus according to the present invention can be used not only in microelectronics industry. Similar requirements have to be met for optical components, for precision mechanical parts, as well as for the optical and magnetic disks of the IT industry.

The surface topography of semiconductor wafers and other mirror-like surfaces can be determined from the coordinates of the image elements described above and the coordinates of the image elements of a flat reference surface by means of the set-up described above and the algorithm of the Hartmann test described above. An essential point of the invention is that the position of the mask 3 and image sensor 6 is chosen in such a way that an essentially sharp image of the mask is formed on the sensor surface, thus the accuracy of the determination of the mask's image elements and consequently the accuracy, lateral resolution and dynamic range of the measurement procedure is markedly improved.

In an alternative embodiment of the invention, a collimating lens is placed in front of the light source 1 in its optical path; this lens makes the light beam emitted by the light source less divergent, thus the light source can be placed closer to the mask 3 thus the size of the measurement apparatus can be decreased.

In an alternative embodiment of the invention, a laser light whose source is made divergent by means of a converging lens, is applied in place of the light source 1.

In an alternative embodiment of the invention, a converging or diverging lens is placed in front of the image sensor 6, thus a magnification and sensitivity can be set up.

In an alternative embodiment of the invention, the light path enclosed by the image sensor 6 and studied surface 5 or the light path enclosed by the light source 1 studied surface and situated on either side of the mask 3 is folded by at least one plane mirror 2, among which mirrors one or more can be semi-transparent; this way, the size of the measurement set-up can be decreased.

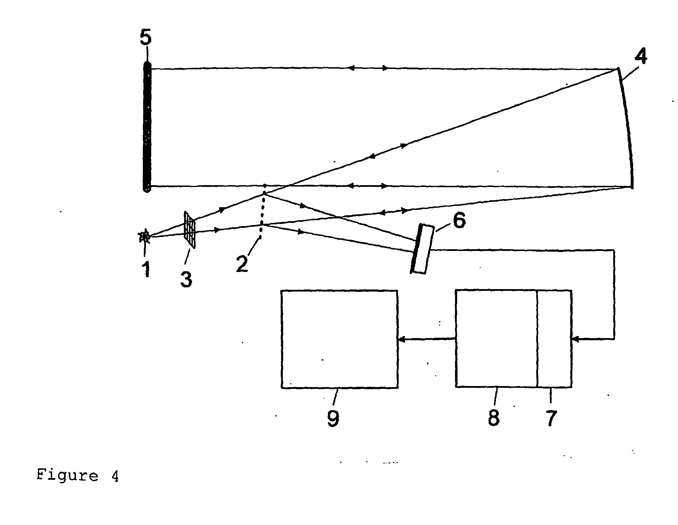

In the preferred embodiment of the invention, the concave mirror 4 is an off-axis parabolic mirror, in whose focal point the point light source is situated. The advantage of the application of the off-axis parabolic mirror is that the respective light paths are perpendicular to the surface of the mask, to the studied surface and to the image sensor, thus the errors associated with the non-normal light incidence of previous set-ups are decreased. Another advantage of the off-axis parabolic mirror over to spherical mirrors and lenses is the lack of optical aberrations. The most preferred embodiment of the invention is shown in Fig. 4: the light beam that is reflected first from the studied surface, then from the concave mirror 4 is projected onto the surface of the image sensor 6 by a semi-transparent mirror.

The embodiments described above can be combined by each other.

The advantages of the present invention over the earlier solutions are as follows:

- the invention is suitable for the fast (in practice: real-time), quantitative, automated, reproducible determination of the surface topography
- the lateral resolution is improved

It is thus demonstrated that the invention fulfills the task.

**List of reference numbers**

1. light source
2. flat mirror
3. structured mask
4. collimating concave mirror
5. surface to be investigated
6. image sensor
7. computer interface
8. computer
9. monitor
10. intensity maximum
11. intensity minimum
12. homogeneous parallel beam of light

13. hillock

14. dent

**Claims**

1. Apparatus for the fast, quantitative, non-contact topographic investigation of semiconductor wafers and other mirror like surfaces, comprising a light source (1), a collimator (4), producing a parallel beam and directing the beam to the surface (5) to be investigated, a structured mask (3) and an image sensor (6), wherein the relative positions of the mask and the sensor to the other elements of the apparatus are chosen to provide an essentially sharp image of the mask on the sensor **characterised in that** said collimator is a collimating concave mirror (4) and said mask (3) is located between said light source (1) and the collimating mirror.

2. Apparatus according to claim 1, **characterised in that** said structured mask (3) is a quadratic grid.

3. Apparatus according to either one of claims 1 and 2, **characterised in that** said collimating concave mirror (4) is an off-axis parabolic mirror.

4. Apparatus according to any one of claims 1 to 3, **characterised in that** a converging lens is positioned in front of said light source (1) into the beam path.

5. Apparatus according to any one of claims 1 to 4, **characterised in that** said light source (1) is a laser.

6. Apparatus according to any one of claims 1 to 4, **characterised in that** said light source (1) is a point source.

7. Apparatus according to any one of claims 1 to 6, **characterised in that** either a converging or a diverging lens is positioned in front of said image sensor (6) into the beam path.

8. Apparatus according to claim 6, **characterised in that** at least one flat mirror (2) is positioned between said point source and said concave mirror (4) to fold the optical path.

9. Apparatus according to any one of claims 1 to 8, **characterised in that** at least one flat mirror (2) is positioned between said sample surface (5) and said collimating mirror and/or between said sensor and said collimating mirror to fold the optical path.

10. Apparatus according to either one of claims 8 and 9, **characterised in that** at least one of said flat mirrors is partially transmissive.

11. Apparatus according to any one of claims 1 to 10, **characterised in that** said image sensor is a CCD image sensor

12. Apparatus according to any one of claims 1 to 11, **characterised in that** said off-axis parabolic mirror (4) is adjusted to provide a light path perpendicular to said surface of the mask (3) and said surface to be investigated (5) and said image sensor (6).

13. Apparatus according to any one of claims 1 to 12, **characterised in that** said image sensor (6) is connected to a computer (8) by an interface (7).

**Patentansprüche**

1. Vorrichtung für eine quantitativ schnelle, berührungsfreie topographische Untersuchung von Halbleiterwafern und anderen spiegelähnlichen Oberflächen, aufweisend eine Lichtquelle (1), einen Kollimator (4), der einen parallelen Lichtstrahl erzeugt und diesen Lichtstrahl auf die zu untersuchende Oberfläche (5) lenkt, eine strukturierte Maske (3) und einen Bildsensor (6), wobei die relativen Positionen der Maske und des Sensors zu den anderen Elementen der Vorrichtung so gewählt werden, daß auf dem Sensor ein im Wesentlichen scharfes Bild der Maske gegeben ist, **dadurch gekennzeichnet**en, daß der Kollimator ein konkaver Kollimatorspiegel (4) ist und daß sich die Maske (3) zwischen der Lichtquelle (1) und dem Kollimatorspiegel befindet.

**2.** Vorrichtung nach Anspruch 1, **dadurch gekennzeichnet, daß** die strukturierte Maske (3) ein quadratisches Rasterfeld ist.

**3.** Vorrichtung nach Anspruch 1 oder 2, **dadurch gekennzeichnet, daß** der konkave Kollimatorspiegel (4) ein außerhalb der Achse liegender parabolischer Spiegel ist.

**4.** Vorrichtung nach einem der Ansprüche 1 bis 3, **dadurch gekennzeichnet, daß** im Strahlengang und vor der Lichtquelle (1) eine Sammellinse positioniert ist.

**5.** Vorrichtung nach einem der Ansprüche 1 bis 4, **dadurch gekennzeichnet, daß** die Lichtquelle (1) ein Laser ist.

**6.** Vorrichtung nach einem der Ansprüche 1 bis 4, **dadurch gekennzeichnet, daß** die Lichtquelle (1) eine Punktquelle ist.

**7.** Vorrichtung nach einem der Ansprüche 1 bis 6, **dadurch gekennzeichnet, daß** im Strahlengang und vor dem Bildsensor (6) entweder eine Sammel- oder eine Streulinse positioniert ist.

**8.** Vorrichtung nach Anspruch 6, **dadurch gekennzeichnet, daß** zur Faltung des optischen Wegs zwischen der Punktquelle und dem konkaven Spiegel (4) ein flacher Spiegel (2) positioniert ist.

**9.** Vorrichtung nach einem der Ansprüche 1 bis 8, **dadurch gekennzeichnet, daß** zur Faltung des optischen Wegs zwischen der Oberfläche (5) und dem Kollimatorspiegel und/oder zwischen dem Sensor und Kollimatorspiegel mindestens ein flacher Spiegel (2) positioniert ist.

**10.** Vorrichtung nach Anspruch 8 oder 9, **dadurch gekennzeichnet, daß** mindestens einer der flachen Spiegeln teilweise transmissive ist.

**11.** Vorrichtung nach einem der Ansprüche 1 bis 10, **dadurch gekennzeichnet, daß** der Bildsensor ein CCD Bildsensor ist.

**12.** Vorrichtung nach einem der Ansprüche 1 bis 11, **dadurch gekennzeichnet, daß** der außerhalb der Achse liegende parabolische Spiegel (4) so justiert ist, daß ein Lichtweg senkrecht zur Oberfläche der Maske (3) und zur zu untersuchenden Oberfläche (5) und dem Bildsensor (6) zur Verfügung steht.

**13.** Vorrichtung nach einem der Ansprüche 1 bis 12, **dadurch gekennzeichnet, daß** der Bildsensor (6) über ein Interface (7) an einen Computer (8) angeschlossen ist.

**Revendications**

**1.** Appareil destiné à l'étude rapide, quantitative et topographique exempte de contact de plaquettes semi-conductrices et d'autres surfaces similaires à des miroirs, qui se compose d'une source lumineuse (1), d'un collimateur (4), produisant un faisceau parallèle et dirigeant le faisceau vers la surface (5) à étudier, d'un masque structuré (3) et d'un capteur d'image (6), en choisissant les positions relatives du masque et du capteur par rapport aux autres éléments de l'appareil pour fournir une image essentiellement nette du masque sur le capteur,
**caractérisé en ce que**
le collimateur est un miroir concave de collimation (4) et le masque (3) est situé entre la source lumineuse (1) et le miroir de collimation.

**2.** Appareil selon la revendication 1,
**caractérisé en ce que**
le masque structuré (3) est une grille quadratique.

**3.** Appareil selon l'une quelconque des revendications 1 et 2,
**caractérisé en ce que**
le miroir concave de collimation (4) est un miroir parabolique excentré.

**4.** Appareil selon l'une quelconque des revendications 1 à 3,

**caractérisé en ce qu'**
une lentille de convergence est positionnée devant la source lumineuse (1) dans la trajectoire du faisceau.

5. Appareil selon l'une quelconque des revendications 1 à 4,
   **caractérisé en ce que**
   la source lumineuse (1) est un laser.

6. Appareil selon l'une quelconque des revendications 1 à 4,
   **caractérisé en ce que**
   la source lumineuse (1) est une source ponctuelle.

7. Appareil selon l'une quelconque des revendications 1 à 6,
   **caractérisé en ce qu'**
   une lentille convergente ou divergente est positionnée devant le capteur d'image (6) dans la trajectoire du faisceau.

8. Appareil selon la revendication 6,
   **caractérisé en ce qu'**
   au moins un miroir plan (2) est positionné entre la source ponctuelle et le miroir concave (4) pour replier la trajectoire optique.

9. Appareil selon l'une quelconque des revendications 1 à 8,
   **caractérisé en ce qu'**
   au moins un miroir plan (2) est positionné entre la surface de l'échantillon (5) et le miroir de collimation et/ou entre le capteur et le miroir de collimation pour replier la trajectoire optique.

10. Appareil selon l'une quelconque des revendications 8 et 9,
    **caractérisé en ce qu'**
    au moins un des miroirs plans est partiellement transmissif.

11. Appareil selon l'une quelconque des revendications 1 à 10,
    **caractérisé en ce que**
    le capteur d'image est un capteur d'image CCD.

12. Appareil selon l'une quelconque des revendications 1 à 11,
    **caractérisé en ce que**
    le miroir parabolique excentré (4) est réglé pour fournir une trajectoire lumineuse perpendiculaire à la surface du masque (3) et à la surface à étudier (5) et au capteur d'image (6).

13. Appareil selon l'une quelconque des revendications 1 à 12,
    **caractérisé en ce que**
    le capteur d'image (6) est connecté à un ordinateur (8) par une interface (7).

Figure 1 (prior art)

Figure 2 (prior art)

Figure 3 (prior art)

Figure 4